# EUROPÄISCHE PATENTSCHRIFT

(11) **EP 3 000 295 B1**
(45) Veröffentlichungstag und Bekanntmachung des Hinweises auf die Patenterteilung: **05.12.2018**
(21) Anmeldenummer: 15401093.8
(22) Anmeldetag: 04.09.2015
(51) Int. Cl.: A01B 63/22

(54) **GEZOGENES LANDWIRTSCHAFTLICHES GERÄT**
PULLED AGRICULTURAL DEVICE
APPAREIL AGRICOLE TRACTE

(30) Priorität: 10.09.2014 DE 102014113010
(43) Veröffentlichungstag der Anmeldung: 30.03.2016
(73) Patentinhaber: Amazonen-Werke H. Dreyer GmbH & Co. KG, 49205 Hasbergen (DE)
(72) Erfinder: Worbs, Christian, 06231 Bad Dürrenberg (DE)

(56) Entgegenhaltungen:
- EP-B1- 2 232 974
- WO-A1-2013/036191

## Beschreibung

Die Erfindung betrifft ein gezogenes landwirtschaftliches Gerät gemäß des Oberbegriffes des Patentanspruches 1.

Ein derartiges gezogenes landwirtschaftliches Gerät ist in der EP 2 232 974 B1 beschrieben. Dieses hier beschriebene Gerät weist ein hinteres Fahrwerk mit zwei Laufrädern auf. Diese Laufräder sind mittels eines Gestänges, welches mindestens eine Schwinge aufweist, an dem Rahmen in aufrechter Ebene verschwenkbar angeordnet. Mittels eines Hydraulikzylinders kann die Schwinge, und somit die Laufräder vom Boden abgehoben oder durch absenken der Laufräder das Gerät vom Boden abgehoben werden. Die Schwinge weist zumindest zwei beabstandet zueinander angeordnete Längsträger auf. Die Längsträger sind geradlinig und beabstandet zueinander angeordnet und mittels zweier Querstreben miteinander verbunden. Die Längsträger und die Querträger sind miteinander verschweißt. Durch die geradlinige Ausgestaltung der Längsträger müssen die Querträger, die die Längsträger miteinander verbinden, relativ lang ausgebildet sein. Darüber hinaus ist die Fertigung relativ zeitaufwändig, weil die Längsträger und Querträger sowie daran angeordnete Teile miteinander verschweißt werden müssen.

Der Erfindung liegt die Aufgabe zu Grunde, eine vorteilhaft ausgestaltete Schwinge zu schaffen.

Diese Aufgabe wird erfindungsgemäß durch die kennzeichnenden Merkmale des Anspruches 1 gelöst.

Infolge dieser Maßnahme ergibt sich eine funktional vorteilhaft ausgestaltete Schwinge, wobei die einzelnen Kräfte vorteilhaft in die einzelnen Trägerelemente der Schwinge eingeleitet werden können.

Die erfindungsgemäße Ausgestaltung der Schwinge ergibt sich dadurch, dass die Außenkontur der Schwinge in Draufsicht gesehen taillienartig ausgebildet ist. Hierbei bietet es sich an, dass im taillienartigen Bereich der Schwinge der Stellzylinder angreift, und dass die Schwinge einteilig ausgebildet ist.

Die einteilige Ausgestaltung der Schwinge lässt sich besonders vorteilhaft verwirklichen, wenn die Schwinge als Gussteil ausgebildet ist.

Eine vorteilhafte Einleitung der Kräfte in die Schwinge wird dadurch erreicht, dass an den Enden der Schwinge jeweils doppelschnittige Gelenklaschen angeordnet sind.

Eine vorteilhafte Ausgestaltung des Gestänges für das Fahrwerk lässt sich dadurch erreichen, dass die Abstützvorrichtung als Viergelenkgestänge ausgebildet ist, dass sämtliche Lenker des Viergelenkgestänges einteilig und vorzugsweise als Gussteil ausgebildet sind.

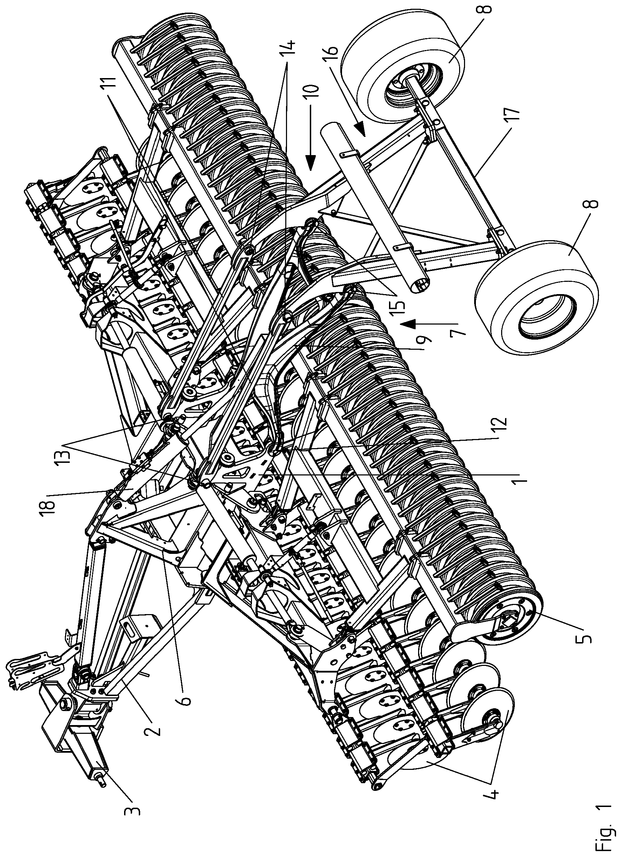

Weitere Einzelheiten der Erfindung sind der Beispielsbeschreibung und den Zeichnungen zu entnehmen. Die Zeichnungen zeigen
- Fig.1: das gezogene landwirtschaftliche Gerät in Transportstellung und in perspektivischer Darstellung,

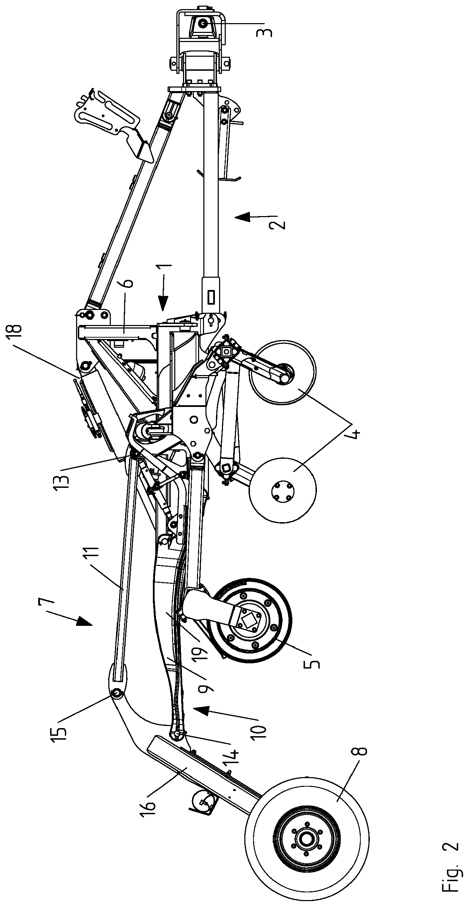

- Fig.2: das gezogene landwirtschaftliche Gerät in Transportstellung und in Seitenansicht,

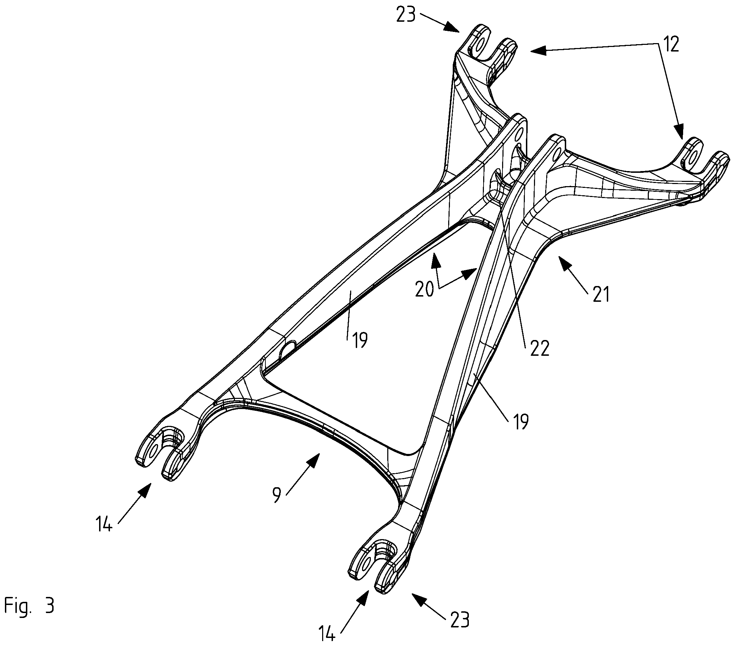

- Fig.3: die untere Schwinge des Gestänges für das Fahrwerk des landwirtschaftlichen Gerätes in perspektivischer Darstellung,

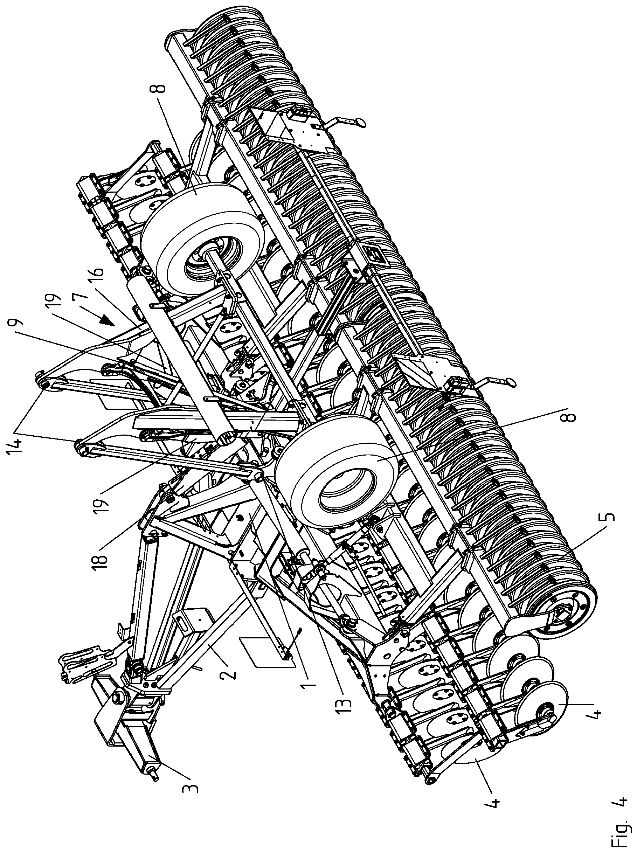

- Fig.4: das gezogene landwirtschaftliche Gerät in Arbeitsstellung mit ausgehobenem Fahrwerk und in perspektivischer Darstellung und

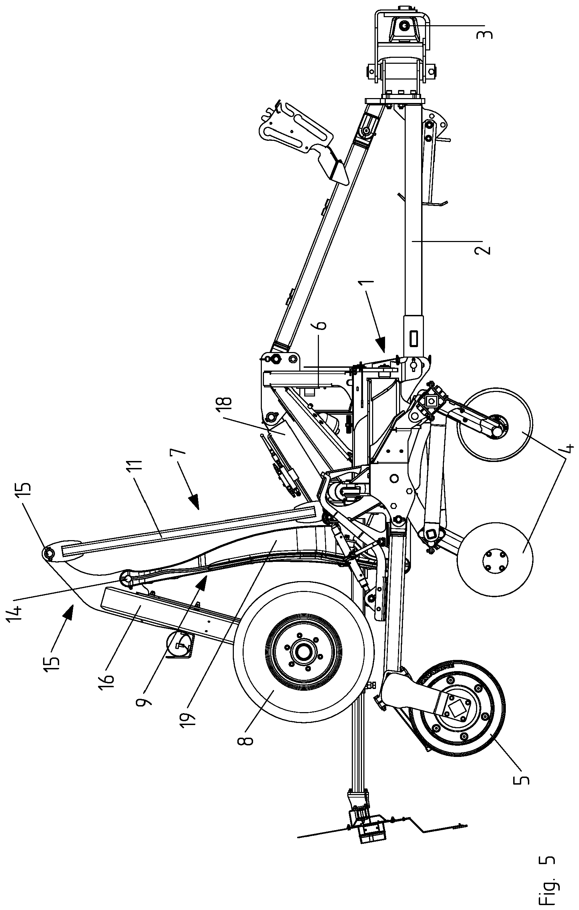

- Fig.5: das gezogene landwirtschaftliche Gerät in Arbeitsstellung mit ausgehobenem Fahrwerk in Seitenansicht.

Das als Bodenbearbeitungsgerät ausgebildete gezogene landwirtschaftliche Gerät weist den Rahmen 1 auf. Auf der Vorderseite des Rahmens ist eine Zugdeichsel 2 mit einem Kupplungselemente 3 angeordnet, über welche des landwirtschaftliche Gerät an die Zugvorrichtung eines Ackerschlepper in bekannter Weise anzukuppeln ist. An dem Rahmen 1 des Gerätes sind mittels Halterungen Bodenbearbeitungselemente, die als Scheiben 4 ausgebildet sind, angeordnet. Das Bodenbearbeitungsgerät ist als Kurzscheibenegge Kurzscheibenegge ausgebildete. Hinter den Bodenbearbeitungswerkzeugen 4 ist mittels Haltearme eine in Höhenrichtung verstellbare Nachlaufwalze 5 angeordnet, welche die Eindringtiefe der Bodenbearbeitungswerkzeuge 4 in den Boden bestimmt. Weiterhin dient die Walze 5 zur Rückverfestigung des von dem Bodenbearbeitungswerkzeugen 4 bearbeiteten Bodens. Die Zugdeichsel 2 ist an den Dreipunktkupplungspunkten des Anbaubockes 6 des Gerätes angeordnet, so dass das Gerät bei einer geringen Arbeitsbreite und einem entsprechend ausgestatteten Ackerschlepper an dessen Dreipunkthebevorrichtung anzuordnen ist.

Auf der dem Kupplungselement 3 abgewandten Seite des Bodenbearbeitungsgerätes ist die Abstützvorrichtung 7 angeordnet, die als Fahrwerk ausgebildet ist, und die beiden beabstandet zueinander angeordneten Laufräder 8 aufweist. Die Abstützvorrichtung 7 weist ein eine untere Schwinge 9 aufweisendes Gestänge 10 sowie zwei obere Lenker 11 auf. Sowohl die Schwinge 9 wie die Lenker 11 sind mittels Gelenken 12 und 13 an dem Rahmen 1 in aufrechter Ebene verschwenkbar angeordnet. Auf der Rückseite der Schwinge 9 und der Lenker 11 sind ebenfalls mittels Gelenken 14 und 15 der aufrechte Bereich der Fahrwerksschwinge 16 angeordnet. An den unteren Enden der Fahrwerksschwinge 16 sind über eine Achse 17 die Laufräder 8 drehbar angeordnet. Die Abstützvorrichtung 7 ist als Viergelenkgestänge ausgebildet, wie vorgeschrieben und in den Zeichnungen gezeigt.

Zwischen dem Rahmen 1 und der Schwinge 9 ist ein die Schwinge 9 verschwenkbarer als Hydraulikzylinder 18 ausgebildeter Stellzylinder angeordnet. Die untere Schwinge weist zwei gekrümmt ausgebildete Längsträger 19 auf, die beabstandet zueinander angeordnet sind. Die gekrümmten Längsträger 19 sind so angeordnet, dass die konvexen Seiten 20 einander benachbart sind. Die Längsträger 19 sind im zueinander am dichtesten beieinander liegenden Bereich 21 mittels eines Verbindungsstückes 22 miteinander verbunden. In diesen Bereich 21 des Verbindungsstückes 22 greift der Stellzylinder 18 an die Schwinge 9 an.

Durch die gekrümmte vorbeschriebene Ausgestaltung und Anordnung der Längsträger 19 zueinander ergibt sich eine Außenkontur der Schwinge 9, die in Draufsicht gesehen taillienartig ausgebildet ist. Die Schwinge 9 ist als Gussteil einteilig ausgebildet.

Die Enden der Schwinge 9, die Teil der Gelenke 12 und 14 sind, weisen doppelschnittige Gelenklaschen 23 auf.

In nicht dargestellter Weise können sämtliche Lenker des Viergelenkgestänges einteilig und vorzugsweise als Gussteil ausgebildet sein. Im Ausführungsbeispiel ist lediglich der untere Lenker als Gussteil ausgebildet.

## Patentansprüche

1. Gezogenes landwirtschaftliches Gerät mit einem Rahmen (1) und auf der Rückseite des Rahmens (1) angeordneter und zumindest zwei quer zur Fahrtrichtung beabstandet zueinander angeordnete Laufräder (8) aufweisende, als Fahrwerk mit einer Fahrwerksschwinge (16) ausgebildete Abstützvorrichtung (7), welche zumindest ein obere und untere Schwingen (9, 11), die ein Viergelenkgestänge bilden, aufweisendes Gestänge (10) aufweist, wobei die Schwingen (9, 11) mittels zumindest vorderer Gelenke (12, 13) an dem Rahmen (1) in aufrechter Ebene verschwenkbar angeordnet ist, wobei die Schwingen (9, 10) hintere Gelenke (14, 15), an denen die Laufräder (8) aufweisende Fahwerksschwinge (16) angelenkt ist, aufweist, wobei zwischen dem Rahmen (1) und der unteren Schwingen (9, 11) sowie die Fahrwerksschwinge (16) ein die untere Schwinge (9) verschwenkbarer motorischer Stellzylinder (18), vorzugsweise Hydraulikzylinder angeordnet ist, wobei die untere Schwinge (9) zumindest zwei beabstandet zueinander angeordnete Längsträger (19) aufweist, **dadurch gekennzeichnet, dass** die Längsträger (19) der unteren Schwinge (9) des Viergelenkgestänges gekrümmt ausgebildet und so angeordnet sind, dass die konvexen Seiten (20) einander benachbart sind, dass die Außenkontur der unteren Schwinge (9) des Viergelenkgestänges in Draufsicht gesehen tailliernartig ausgebildet ist, dass die Längsträger (19) der unteren Schwinge (9) des Viergelenkgestänges spiegelbildlich derart zueinander angeordnet sind, dass die Längsträger (19) der unteren Schwinge (9) des Viergelenkgestänges im zueinander am dichtesten beieinander liegenden Bereich (21) mittels eines Verbindungsstückes (22) miteinander verbunden sind, dass im Bereich des Verbindungsstückes (22) der Stellzylinder (18) an die untere Schwinge (9) des Viergelenkgestänges angreift, und dass die Schwinge (9) einteilig ausgebildet ist.

2. Gerät nach zumindest einem der vorstehenden Ansprüche, **dadurch gekennzeichnet, dass** die untere Schwinge (9) als Gussteil ausgebildet ist.

3. Gerät nach zumindest einem der vorstehenden Ansprüche, **dadurch gekennzeichnet, dass** an den Enden der untere Schwinge (9) des Viergelenkgestänges jeweils doppelschnittige Gelenklaschen (23) angeordnet sind.

4. Gerät nach zumindest einem der vorstehenden Ansprüche, **dadurch gekennzeichnet, dass** sämtliche Lenker des Viergelenkgestänge einteilig und vorzugsweise als Gussteil ausgebildet sind.

## Claims

1. Pulled agricultural device with a frame (1) and a supporting device (7) which is arranged on the rear side of the frame (1) and has at least two running wheels (8), which are arranged at a distance from one another transversely with respect to the direction of travel, and is designed as a chassis with a chassis rocker (16) and has at least one linkage (10) having upper and lower rockers (9, 11) which form a four-bar linkage, wherein the rockers (9, 11) are arranged pivotably in a vertical plane on the frame (1) by means of at least front joints (12, 13), wherein the rockers (9, 10) have rear joints (14, 15), at which the chassis rocker (16) having running wheels (8) is articulated, wherein a motorized actuating cylinder (18), preferably hydraulic cylinder, which can pivot the lower rocker (9) is arranged between the frame (1) and the lower rockers (9, 11) and the chassis rocker (16), wherein the lower rocker (9) has at least two longitudinal members (19) arranged spaced apart from one another, **characterized in that** the longitudinal members (19) of the lower rocker (9) of the four-bar linkage are of curved design and are arranged in such a manner that the convex sides (20) are adjacent to one another, **in that** the outer contour of the lower rocker (9) of the four-bar linkage is formed in a tapered manner, as seen in top view, **in that** the longitudinal members (19) of the lower rocker (9) of the four-bar linkage are arranged in a mirror-inverted manner with respect to one another in such a manner that the longitudinal members (19) of the lower rocker (9) of the four-bar linkage are connected to one another by means of a connecting piece (22) in the region (21) where they lie closest to one another, **in that**, in the region of the connecting piece (22), the actuating cylinder (18) acts on the lower rocker (9) of the four-bar linkage, and **in that** the rocker (9) is formed integrally.

2. Device according to at least one of the preceding claims, **characterized in that** the lower rocker (9) is designed as a cast part.

3. Device according to at least one of the preceding claims, **characterized in that** double-section joint plates (23) are in each case arranged at the ends of the lower rocker (9) of the four-bar linkage.

4. Device according to at least one of the preceding claims, **characterized in that** all of the links of the four-bar linkage are formed integrally and preferably as a cast part.

## Revendications

1. Appareil agricole tracté avec un châssis (1) et avec un dispositif d'appui (7) disposé sur le côté arrière du châssis (1) et présentant au moins deux roues de roulage (8) disposées à distance l'une de l'autre transversalement à la direction de marche, et réalisé sous la forme d'un train de roulement avec un cadre oscillant de train de roulement (16), et qui présente au moins une tringlerie (10) présentant des bielles oscillantes supérieures et inférieures (9, 11), qui forment un parallélogramme articulé, dans lequel les bielles oscillantes (9, 11) sont agencées de façon pivotante dans un plan vertical sur le châssis (1) au moyen d'au moins des articulations avant (12, 13), dans lequel les bielles oscillantes (9, 10) présentent des articulations arrière (14, 15) par lesquelles le cadre oscillant de train de roulement (16) présentant des roues de roulage (8) est articulé, dans lequel un vérin motorisé (18), de préférence un cylindre hydraulique, pouvant faire pivoter la bielle oscillante inférieure (9) est disposé entre le châssis (1) et les bielles oscillantes inférieures (9, 11) ainsi que le cadre oscillant de train de roulement (16), dans lequel la bielle oscillante inférieure (9) présente au moins deux longerons (19) disposés à distance l'un de l'autre, **caractérisé en ce que** les longerons (19) de la bielle oscillante inférieure (9) du parallélogramme articulé sont incurvés et sont disposés de telle manière que les côtés convexes (20) soient voisins l'un de l'autre, **en ce que** le contour extérieur de la bielle oscillante inférieure (9) du parallélogramme articulé vu en plan est de forme cintrée, **en ce que** les longerons (19) de la bielle oscillante inférieure (9) du parallélogramme articulé sont disposés de façon symétrique l'un par rapport à l'autre, **en ce que** les longerons (19) de la bielle oscillante inférieure (9) du parallélogramme articulé sont reliés l'un à l'autre au moyen d'une pièce de liaison (22) dans la région (21) située le plus près l'un de l'autre, **en ce que** le vérin (18) agit dans la région de la pièce de liaison (22) sur la bielle oscillante inférieure (9) du parallélogramme articulé et **en ce que** la bielle oscillante (9) est réalisée en une seule pièce.

2. Appareil selon au moins une des revendications précédentes, **caractérisé en ce que** la bielle oscillante inférieure (9) est formée par une pièce coulée.

3. Appareil selon au moins une des revendications précédentes, **caractérisé en ce que** des oreilles d'articulation doubles (23) sont respectivement agencées aux deux extrémités de la bielle oscillante inférieure (9) du parallélogramme articulé.

4. Appareil selon au moins une des revendications précédentes, **caractérisé en ce que** toutes les bielles du parallélogramme articulé sont réalisées en une seule pièce et sont de préférences formées par des pièces coulées.
